**Europäisches Patentamt**

**European Patent Office**

**Office européen des brevets**

(11) Veröffentlichungsnummer : **0 440 578 A1**

# (12) EUROPÄISCHE PATENTANMELDUNG

(21) Anmeldenummer : **91810026.4**

(22) Anmeldetag : **15.01.91**

(51) Int. Cl.⁵ : **B29C 33/38, B23Q 1/14, B29D 11/00**

(30) Priorität : **24.01.90 CH 226/90**

(43) Veröffentlichungstag der Anmeldung :
**07.08.91 Patentblatt 91/32**

(84) Benannte Vertragsstaaten :
**AT BE CH DE DK ES FR GB GR IT LI LU NL SE**

(71) Anmelder : **CIBA-GEIGY AG**
**Klybeckstrasse 141**
**CH-4002 Basel (CH)**

(72) Erfinder : **Höfer, Peter**
**Karlsbader Strasse 50**
**W-8750 Aschaffenburg (DE)**
Erfinder : **Hagmann, Peter, Dr.**
**Chamissostrasse 20**
**W-8759 Hösbach-Bahnhof (DE)**
Erfinder : **Geis, Helmut**
**Bergstrasse 1**
**W-8752 Kleinostheim (DE)**
Erfinder : **Haase, Lothar**
**Hahner Strasse 55**
**W-5222 Morsbach/Sieg (DE)**

(54) **Vorrichtung zur Herstellung einer Formgebungsfläche an einem Formwerkzeug für die Fertigung optischer und ophthalmischer Linsen.**

(57) Eine Vorrichtung zur Herstellung von Formgebungsflächen an einem Formwerkzeug für die Fertigung optischer und ophthalmischer Linsen durch spanende Bearbeitung mit einer in einem Spindelstock 15 drehbar gelagerten Spindel 5, an welcher ein um die Spindelachse 9 mit der Spindel 5 drehbares Werkstück 2 befestigbar ist, einem spanenden Drehwerkzeug 1, das um eine zur Spindelachse 9 senkrechte Schwenkachse 3 schwenkbar ist, und einer Einstelleinrichtung 14, durch welche der Schwenkradius des Drehwerkzeugs gegenüber der Schwenkachse 3 während des spanenden Arbeitsganges schwenkwinkelabhängig einstellbar ist, und welche einen piezoelektrischen Antrieb 4 und/oder 21 aufweist, der während des spanenden Arbeitsganges zur Schwenkradiuseinstellung des Drehwerkzeugs 1 eine lineare Stellbewegung auf das Drehwerkzeug 1 in radialer Richtung zur Schwenkachse 3 überträgt.

EP 0 440 578 A1

Jouve, 18, rue Saint-Denis, 75001 PARIS

# VORRICHTUNG ZUR HERSTELLUNG EINER FORMGEBUNGSFLÄCHE AN EINEM FORMWERKZEUG FÜR DIE FERTIGUNG OPTISCHER UND OPHTHALMISCHER LINSEN

Die Erfindung betrifft eine Vorrichtung zur Herstellung einer Formgebungsfläche an einem Formwerkzeug für die Fertigung optischer und ophthalmischer Linsen, insbesondere einer Formgebungsfläche an einem Formwerkzeug für die Fertigung von Kontaktlinsen durch Formgießen.

Die Herstellung von optischen und ophthalmischen Linsen (Kontaktlinsen) mit Hilfe von Formgießen (Gießform- oder Einflächen-Gießform-Verfahren) gewinnt immer mehr an Bedeutung. Bei diesen Formgießverfahren werden Formen verwendet, die wenigstens eine Formgebungsfläche mit dem Negativ einer Kontaktlinsenfläche (Front- oder Rückfläche) aufweisen. Das Linsenmaterial wird in fließfähiger Form zwischen zwei Formen zur Formung der Linsengeometrie eingebracht. In aller Regel wird das Linsenmaterial als Monomer oder Prepolymer in die Gießform eingebracht. Durch Polymerisation, beispielsweise durch Zugabe eines Initiators oder durch Energiezufuhr in Form von UV-Strahlung oder Wärme, bzw. Mikrowellen, erfolgt die Polymerisation des Kontaktlinsenmaterials in der Gießform. Ein Schwund bei der Polymerisation kann beispielsweise durch eine Relativverschiebung der beiden Formen zueinander ausgeglichen werden, so daß der Zwischenraum zwischen den beiden Formen, die die Negative der gewünschten Kontaktlinsengeometrien an Vorder- und Rückfläche der Kontaktlinse aufweisen, beim Polymerisationsvorgang vollständig ausgefüllt ist.

Am fertig polymerisierten Endprodukt sind die Formgebungsflächen der Formen an der Rückfläche und/oder der Vorderfläche exakt nachgebildet. Im Falle des Gießform-Verfahrens sind die Formen mit solchen Formgebungsflächen versehen, daß sie auch den gewünschten Linsenrand während des Formgießens bilden. Während beim Einflächen-Gießform-Verfahren eine Nachbearbeitung des Randes zur Erzielung der gewünschten Linsenrandgeometrie erforderlich ist, ist diese Nachbearbeitung beim Gießform-Verfahren überflüssig. Im Falle der Herstellung von sogenannten weichen Linsen kann sich dem Formvorgang der Linse auch ein Hydratationsschritt anschließen.

Durch Formgießen lassen sich nicht nur Kontaktlinsen, sondern auch Brillengläser und andere optische Linsen herstellen.

Die Formen, welche die Formgebungsflächen beim Formgießen von Kontaktlinsen aufweisen, bestehen in aller Regel aus thermoplastischem Material, z. B. Polypropylen. Diese Formen werden nach dem Spritzgießverfahren hergestellt und sind in herkömmlicher Weise als Einmalartikel ausgeführt. Für die Herstellung dieser Formen benötigt man Formwerkzeuge, welche in die Spritzgußwerkzeuge eingesetzt werden. Die Formwerkzeuge besitzen ebenfalls Formgebungsflächen, die den gewünschten Linsengeometrien entsprechen. Mit solchen Formwerkzeugen können mehrere 10 000 Formen aus thermoplastischem Material hergestellt werden. Anschließend ist ein Austausch oder eine Überarbeitung erforderlich. Beim Austausch muß das neue Formwerkzeug zur Sicherstellung der Reproduzierbarkeit der gewünschten Linsengeometrien innerhalb extrem enger Toleranzen gefertigt werden. Insbesondere im Falle der Herstellung von asphärischen, elliptischen, torischen oder auch multifokalen Linsen werden hier an die zum Einsatz kommenden Formwerkzeuge hohe Anforderungen gestellt.

Aufgabe der Erfindung ist es, eine Vorrichtung zur Herstellung einer Formgebungsfläche an einem Formwerkzeug, das für die Fertigung optischer und ophthalmischer Linsen verwendet wird, zu schaffen, mit dem die Formgebungsfläche mit hoher Genauigkeit und Reproduzierbarkeit gebildet wird.

Diese Aufgabe wird bei der eingangs genannten Vorrichtung erfindungsgemäß gelöst durch

– eine Arbeitsspindel, die von einem Drehantrieb um eine Spindelachse angetrieben ist, und an welcher ein Formwerkzeug-Rohling als Werkstück befestigt ist ;

– ein gegenüber dem Werkstück verstellbares materialabtragendes Werkzeug, mit welchem am Werkstück die Formgebungsfläche gebildet wird, und welches um eine zur Spindelachse senkrechte Schwenkachse schwenkbar ist ; und

– eine Einstelleinrichtung, mit welcher während der Bildung der Formgebungsfläche am Werkstück eine Stellbewegung des Werkzeugs gegenüber dem Werkstück in Abhängigkeit von der Linsengeometrie, die mit der aus dem Werkstück gebildeten Formgebungsfläche geformt wird, einstellbar ist.

Gegebenenfalls kann die Stellbewegung des Werkzeugs auch in Abhängigkeit vom Rotationswinkel der Spindel einstellbar sein.

Auf diese Weise können dann nicht nur sphärische Flächen auf dem Formwerkzeug erzeugt werden, sondern es lassen sich beliebig vorgebbare Formgebungsflächen auf dem Formwerkzeug erreichen.

Das materialabtragende Werkzeug kann um eine zur Spindelachse senkrechte Schwenkachse schwenkbar sein, und mit der Einstelleinrichtung läßt sich bei dieser Ausführungsform der Schwenkradius des Werkzeugs gegenüber der Schwenkachse schwenkwinkelabhängig einstellen.

Ferner kann bei einer anderen Ausführungsform das materialabtragende Werkzeug durch die Einstelleinrichtung in Richtung der Spindelachse bzw. parallel zur Spindelachse und in einer dazu senkrechten Richtung einstellbar sein. Das Werkzeug ist dann in bevorzugter Weise in x- und y-Koordinaten, gesteuert durch die Einstelleinrichtung, bewegbar gelagert.

Die Einstelleinrichtung kann einen piezoelektrischen Antrieb aufweisen, der eine Stellbewegung für das materialabtragende Werkzeug in wenigstens einer der Einstellrichtungen erzeugt. Im Falle der Einstellbarkeit des materialabtragenden Werkzeugs in Richtung der Spindelachse bzw. parallel zur Spindelachse und in einer dazu senkrechten Richtung wirkt der piezoelektrische Antrieb bevorzugt in Richtung der Spindelachse bzw. parallel dazu. Es ist jedoch auch möglich, daß noch zusätzlich in der dazu senkrechten Richtung der piezoelektrische Antrieb eine Stellbewegung erzeugen kann.

Für die Herstellung von rotationssymmetrischen Formwerkzeugen besitzt die Einstelleinrichtung, mit welcher die Stellbewegung für das materialabtragende Werkzeug in radialer Richtung zur Schwenkachse des Werkzeugs verändert wird, in bevorzugter Weise einen piezoelektrischen Antrieb, insbesondere in Form einer Piezotranslatoreinrichtung. In Abhängigkeit von der gewünschten Linsengeometrie bzw. Geometrie der Formgebungsfläche am Formwerkzeug wird die Stellbewegung des piezoelektrischen Antriebs in Relation zum Schwenkwinkel des Werkzeugs um seine Schwenkachse gebracht. Auf diese Weise lassen sich dann beliebig vorgebbare Geometrien für die Formgebungsflächen am Werkstück herstellen.

Bei der Herstellung von Formeinsätzen für die Fertigung von Linsen nach dem Einflächengießform- oder dem Gießformverfahren kann der Formeinsatz neben dem Negativ der Vorder-oder Rückfläche der Linse, insbesondere der Kontaktlinse, auch Teile oder die gesamte Negativgeometrie des Linsenrandes enthalten.

Die hierbei erforderlichen relativ großen Verstellwege können dann mit Hilfe von Steuerschablonen, die in Kombination mit dem piezoelektrischen Antrieb eingesetzt werden, erreicht werden. Die erforderlichen Steuerschablonen enthalten in Abstufungen, welche dem maximalen Verschiebeweg des piezoelektrischen Antriebs entsprechen, jeweils eine Grundgeometrie. Die zwischen den Abstufungen liegenden Feinstellbewegungen werden vom piezoelektrischen Antrieb geliefert. Stellbewegungen für das materialabtragende Werkzeug, beispielsweise unterhalb 100 µm, können vom piezoelektrischen Antrieb erzeugt werden. Für die Steuerschablonen benötigt man eine geringe Anzahl von Schablonen, die die Grundgeometrien für die Formeinsätze liefern. Die Bildung der Formgebungsflächen an den Formeinsätzen erfolgt dann über die unterschiedliche Ansteuerung des piezoelektrischen Antriebs unter der jeweiligen Berücksichtigung der Grundgeometrie der verwendeten Steuerschablone. Die Abtastung der Steuerschablone kann in bekannter Weise mechanisch oder auch berührungslos mit Abstandssensoren erfolgen.

Als Material für die Formeinsätze kommen bevorzugt Metalle, wie Aluminium, Aluminiumlegierungen, Stähle, Edelstähle, Nickel, Messing, Kupfer, Kupfer-Beryllium und dgl., in Betracht. Nach der Herstellung der Formgebungsflächen an den Formeinsätzen ist auch eine Beschichtung der Formgebungsflächen mit einem anderen Material, wie z. B. TiNi oder Chrom, möglich. Damit kann die Standzeit der Formgebungsfläche am Formeinsatz und das Entformungsverhalten noch erheblich verbessert werden.

Neben Metallen können als Werkstoffe für die Formeinsätze auch hochtemperaturbeständige Polymere eingesetzt werden. Beispiele hierfür sind Polyphenylensulfide (PPS), Polyetherimide oder Polyaryletherketone. Die Formeinsätze können nicht nur in Spritzgußwerkzeugen, sondern bei geeigneter Wahl der Werkstoffe auch als Prägestempel für die Herstellung von Linsen nach dem Präge- oder Thermoformverfahren eingesetzt werden. Auch können die Formen, welche beim Einflächen-Gießform- bzw. Gießform-Verfahren zur Linsenfertigung verwendet werden, mit den entsprechenden Formgebungsflächen an der erfindungsgemäßen Vorrichtung versehen werden, so daß man hier eine direkte Herstellung dieser Formen erreicht.

Bei Einsatz eines piezoelektrischen Antriebs in der Einstelleinrichtung läßt sich eine Relativbewegung zwischen dem Werkstück und dem Werkzeug, das bevorzugt als Drehdiamant oder auch als Laser ausgebildet sein kann, mit geringsten Positionsänderungen im nm-Bereich erzielen, wobei Gesamtstellwege bis zu einigen 100 Mikron und, falls erforderlich, bis in den Millimeterbereich möglich sind. Auf diese Weise läßt sich durch die lineare Stellbewegung, welche die piezoelektrische Antriebseinrichtung auf das Werkzeug ausübt, in Kombination mit der Schwenkbewegung, die das Werkzeug um seine Schwenkachse während der materialabtragenden Formgebung ausführt, praktisch jede herzustellende Kontaktlinsengeometrie fertigen. Wird die lineare Stellbewegung zusätzlich noch in Abhängigkeit vom Rotationswinkel der Spindel geregelt, so lassen sich auch nicht rotationssymmetrische Linsengeometrien an der Frontfläche und/oder Rückfläche fertigen.

Aufgrund der praktisch unbegrenzten Auflösung des piezoelektrischen Antriebssystems lassen sich an den Formgebungsflächen glatte Flächen erreichen, bei denen weitere Nachbearbeitungsschritte, wie z. B. Polieren zur Verbesserung der Oberflächenqualität, überflüssig sind. Die Oberflächenqualität läßt sich noch dadurch erhöhen, daß luftgelagerte oder hydraulisch gelagerte Spindeln verwendet werden.

Die Stellbewegung des piezoelektrischen Antriebs wird bei der Herstellung rotationssymmetrischer Formgebungsflächen bevorzugt in Abhängigkeit vom Schwenkwinkel, den das Werkzeug um seine Schwenkachse einnimmt, gesteuert. Hierzu führt in bevorzugter Weise der piezoelektrische Antrieb die Schwenkbewegung des Werkzeugs mit aus. In vorteilhafter Weise kann daher der piezoelektrische Antrieb an einer um die Schwenkachse schwenkbaren Schlittenführung gelagert sein, an welcher auch das Werkzeug in radialer Richtung zur Schwenkachse geführt ist.

Zum Beispiel kann der piezoelektrische Antrieb als Piezotranslator ausgebildet sein, der seine Stellbewegung in einer Längsachse ausführt. Am einen Ende ist der Piezotranslator an einem an der Schlittenführung geführten Schlitten, an welchem auch ein Werkzeughalter für das insbesondere als Drehwerkzeug ausgebildete Werkzeug gelagert ist, abgestützt, und an seinem anderen Ende ist der Piezotranslator am Werkzeughalter abgestützt. In bevorzugter Weise ist dabei der Werkzeughalter mit Federvorspannung gegen den piezoelektrischen Antrieb abgestützt. Es ist auch möglich, das Werkzeug direkt auf den piezoelektrischen Antrieb (Piezotranslator), der am Werkzeughalter abgestützt ist, aufzusetzen. Der piezoelektrische Antrieb kann auch aus mehreren Piezotranslatoren bestehen, die in radialer Richtung zur Schwenkachse hintereinander angeordnet sind und wahlweise zur Erzeugung der Stellbewegung angesteuert werden können.

Zur Erzielung der gewünschten Geometrie an der rotations-symmetrischen Formgebungsfläche des Werkstücks kann die Betriebsspannung des piezoelektrischen Antriebs in Abhängigkeit vom Schwenkwinkel des Werkzeugs um die Schwenkachse eingestellt werden. Diese Einstellung kann durch eine Regeleinrichtung überwacht werden. Hierzu kann ein Sensor für die Ist-Stellbewegung des piezoelektrischen Antriebs an eine Rechnereinheit angeschlossen sein. Ferner kann die Rechnereinheit einen durch die gewünschte Linsengeometrie für jeweilige Schwenkwinkel des Werkzeugs vorgegebenen Sollwert der Stellbewegung des piezoelektrischen Antriebs empfangen und/oder speichern. Die Betriebsspannung für den piezoelektrischen Antrieb wird dann in Abhängigkeit vom Sollwert-Istwertvergleich eingestellt.

Zur Grobeinstellung des Schwenkradiusses des Werkzeugs um seine Schwenkachse kann der Schlitten, an welchem das Werkzeug gelagert ist, an der Schlittenführung linear verstellbar sein. Die Grobeinstellung kann auch durch den Rechner geregelt werden.

Der piezoelektrische Antrieb kann auch als eine direkt auf das Werkzeug einwirkende Piezotranslatoreinrichtung ausgebildet sein. Hierzu kann in bevorzugter Weise der Piezotranslator die Funktion des Werkzeughalters übernehmen.

Es ist auch möglich, den piezoelektrischen Antrieb aus mehreren, insbesondere zwei Piezotranslatoreinrichtungen zusammenzusetzen, nämlich z. B. einer Piezotranslatoreinrichtung, welche, wie oben schon erläutert, auf den Werkzeughalter wirkt, und einer zweiten Piezotranslatoreinrichtung, welche direkt auf das Werkzeug wirkt und beispielsweise den Werkzeughalter bildet. Hierbei kann die auf den Werkzeughalter einwirkende Piezotranslatoreinrichtung im Zusammenhang mit der Grobeinstellung verwendet werden, und die Piezotranslatoreinrichtung, welche als Werkzeughalter ausgebildet ist, im Zusammenhang mit der Feineinstellung des Werkzeugs verwendet werden.

Eine Erhöhung der Genauigkeit, und insbesondere eine Kompensation von Werkzeugverschleiß bei der Herstellung der gewünschten Linsengeometrie an der Formgebungsfläche des Werkstücks, läßt sich dadurch erzielen, daß die Einstellung des Werkzeugs ferner in Abhängigkeit vom Ausgangssignal einer Oberflächenmeßeinrichtung gesteuert wird, welche die vom Werkzeug hergestellte Istgeometrie an der Linse bevorzugt durch berührungslose Abtastung erfaßt.

Es wird ein hoher Automatisierungsgrad erreicht. Es ist lediglich erforderlich, die gewünschte Kontaktlinsengeometrie in eine Speichereinrichtung der elektronischen Steuerung der Einstelleinrichtung einzugeben. Es können Formgebungsflächen für beispielsweise Kontaktlinsen mit asphärischen Vorder-und-/oder Rückflächen hergestellt werden, und es kann eine genaue Anpassung vor allem der Rückfläche der Linsen an die jeweiligen Hornhautoberflächen der Kontaktlinsenträger vorgenommen werden. Außerdem lassen sich ohne weiteres auch Formgebungsflächen am Werkstück für multifokale, insbesondere bifokale Kontaktlinsen, für die Versorgung von presbyopen Patienten herstellen.

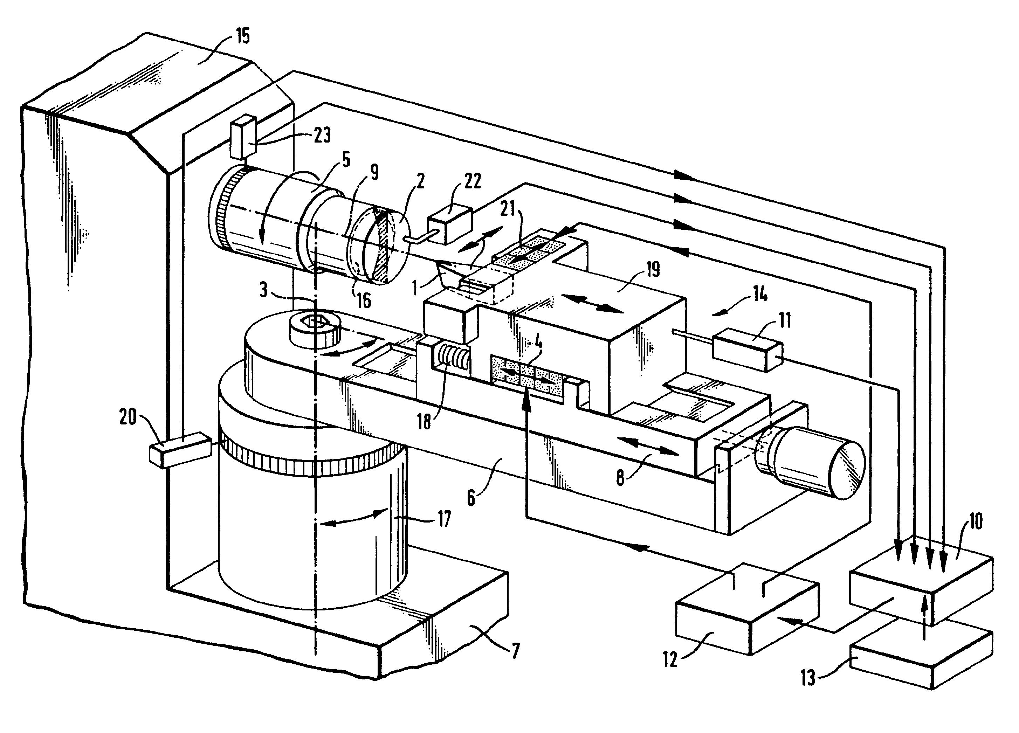

Anhand der beiliegenden Figur wird an einem Ausführungsbeispiel die Erfindung noch näher erläutert.

Die Figur zeigt in schematischer Darstellung eine Drehmaschine mit elektronischer Steuerung für einen piezoelektrischen Antrieb zur Feineinstellung des Schwenkradiusses des Drehwerkzeugs, wobei die elektronische Steuer- bzw. Regeleinrichtung als Blockschaltbild dargestellt ist.

Die dargestellte Drehbank ist auf einem Maschinenbett 7 angeordnet und weist einen Spindelstock mit nicht näher dargestelltem Drehantrieb für eine Spindel 5 auf. Die Spindel 5 ist in einem an sich bekannten Luft- oder Hydrauliklager oder anderem geeignetem Lager drehbar gelagert. Durch den nicht näher dargestellten Antrieb wird die Spindel 5 in Drehung um ihre Spindelachse 9 versetzt. Die Spindel 5 besitzt an ihrer Spindelspitze 16 eine geeignete Befestigungseinrichtung (Spannfutter oder dgl.), mit welcher ein Werkstück 2 befestigt wird. Bei dem Endprodukt des Werkstücks 2 kann es sich um einen Formeinsatz handeln, der in einem Spritzgußwerkzeug zur Herstellung der Form verwendet wird, die beim Einflächen-Gießform bzw. Gießform-Verfahren zur Linsen-, insbesondere Kontaktlinsenfertigung zum Einsatz kommt. Es kann sich bei dem Endprodukt des Werkstücks jedoch auch um die Form selbst handeln, die beim Formgießen zur Linsenfertigung zum Einsatz gebracht wird.

Die Drehbank besitzt ferner einen säulenartigen Drehsupport 17, der um eine Schwenkachse 3 schwenkbar ist. An dem Drehsupport 17 ist eine Schlittenführung 6 befestigt. Es ist jedoch auch möglich, daß die Schlittenführung 6 an dem Drehsupport 17 um die Schwenkachse 3 schwenkbar gelagert ist und der Drehsupport 17 am Maschinenbett 7 ortsfest gelagert ist. An der Schlittenführung 6 ist ein Werkzeugschlitten 8 linear und in radialer Richtung zur Schwenkachse bewegbar geführt. Am Werkzeugschlitten 8 ist ein Werkzeughalter 19 für ein Drehwerkzeug 1, insbesondere einen Drehdiamanten, gelagert. Der Werkzeugschlitten 8 kann zur Grobeinstellung des Schwenkradiusses des Drehwerkzeugs 1 um die Schwenkachse 3, beispielsweise mit Hilfe eines nicht näher dargestellten Motorantriebs oder auch eines Handkurbelantriebs, entlang der Schlittenführung 6 bewegt werden. Die Grobeinstellung kann durch Steuerung einer Rechnereinheit 10 erfolgen.

Zur Feineinstellung des Schwenkradiusses des bevorzugt als Drehwerkzeug 1 ausgebildeten Material abtragenden Werkzeugs um die Schwenkachse 3 bei der Formwerkzeugherstellung besitzt bei dem dargestellten Ausführungsbeispiel einer Drehbank eine Einstelleinrichtung 14 einen piezoelektrischen Antrieb, der beim dargestellten Ausführungsbeispiel aus zwei Piezotranslatoreinrichtungen 4 und 21 besteht. Derartige piezoelelktrische Antriebe sind beispielsweise aus PI, Physik Instrumente, Piezo Guide, Teil 1, Piezostelltechnik in Theorie und Praxis bekannt. Bevorzugt handelt es sich bei dem verwendeten piezoelektrischen Antrieb um Piezotranslatoren, welche in ihrer Längsachse in Abhängigkeit einer angelegten Betriebsspannung Stellbewegungen ausführen. Rasche Ausdehnungen mit kleinen Ansprechzeiten sind für derartige piezoelektrische Antriebe ein herausragendes Merkmal. Bevorzugt bestehen derartige piezoelektrische Antriebe aus PZT(Blei-Zirkonium-Titanat)-Keramiken. Aufgrund einer angelegten Betriebsspannung wird durch die sprunghaft erhöhte elektrische Feldstärke eine fast verzögerungsfreie Längenänderung des Piezotranslators erreicht.

Diese Eigenschaften des piezoelektrischen Antriebs werden bei der Erfindung vor allem zur Feineinstellung des Schwenkradiusses des Schwenkwerkzeugs um die Schwenkachse 3 ausgenützt.

In vorteilhafter Weise können mehrere Piezotranslatoren hintereinander angeordnet sein und eine Kette bilden. Es kann dann eine wahlweise Ansteuerung der einzelnen Piezotranslatoren erfolgen in Abhängigkeit von der gewünschten Längenänderung bzw. Stellbewegung. Das Ausdehnungsverhalten der einzelnen Piezotranslatoren läßt sich dann für die zu erzielende Stellbewegung durch entsprechende Ansteuerung kombinieren. Hierdurch läßt sich nicht nur die Feineinstellung, sondern auch die Grobeinstellung erreichen.

Die Steuereinrichtung zur Steuerung einer Betriebsspannung für den piezoelektrischen Antrieb, welche beim Ausführungsbeispiel von einem Spannungsverstärker 12 geliefert wird, besitzt die Rechnereinheit 10. Diese Rechnereinheit 10 empfängt Daten zur gewünschten Formwerkzeuggeometrie von einer Speichereinrichtung 13, die auch als Geometrieeingabeeinrichtung ausgebildet sein kann. Die Rechnereinheit 10 setzt diese Formwerkzeuggeometrien für die Vorder- und/oder Rückfläche der herzustellenden Kontaktlinse in jeweiligen Schwenkwinkeln des Drehwerkzeugs 1 um die Schwenkachse zugeordneten Radiuswerten des Drehwerkzeugs 1 in Bezug auf die Schwenkachse 3 um. Der jeweilige Ist-Schwenkradius des Drehwerkzeugs 1 läßt sich mit Hilfe eines Sensors 11 abtasten. Das Ausgangssignal des Sensors 11 wird ebenfalls der Rechnereinheit 10 zugeführt. Ferner wird der Rechnereinheit 10 der jeweilige Schwenkwinkel, den das Drehwerkzeug, ausgehend von einer Nullposition, um die Schwenkachse 3 einnimmt, zugeführt. Hierzu ist ein Winkelsensor 20 vorgesehen.

Beim spanenden Bearbeitungsvorgang wird das Drehwerkzeug 1 auf das Werkstück 2 aufgesetzt. Zur Grobeinstellung kann der Werkzeugschlitten 8 durch Handbetrieb oder durch nicht näher dargestellten elektromotorischen Antrieb linear an der Schlittenführung 6, gegebenenfalls gesteuert durch die Rechnereinheit 10, bewegt werden. Zur Feineinstellung des Schwenkradiusses des Drehwerkzeugs 1 bei der Herstellung der endgültigen gewünschten Formgebungsfläche steuert die Rechnereinheit 10 den Spannungsverstärker 12 entsprechend an, so daß dieser eine Betriebsspannung für den piezoelektrischen Antrieb, bestehend aus den beiden Piezotranslatoreinrichtungen 4 und 21, liefert, wodurch eine Stellbewegung herbeiführt wird. Diese Stellbewegung des piezoelektrischen Antriebs ist durch die gespeicherten Werte der Schwenkradien des Drehwerkzeugs 1, welche von den Schwenkwinkeln des Werkzeugs aufgrund der eingegebenen Geometrie abhängen, bestimmt. Dabei kann ferner durch den Sensor 11 die dem Werkzeug 1 aufgeprägte Stellbewegung abgetastet werden und mit einer Sollwertstellung verglichen werden, so daß aufgrund dieses Sollwert-Istwertvergleichs eine geregelte Betriebsspannungsversorgung des piezoelektrischen Antriebs erreicht wird. Auf diese Weise werden gegebenenfalls Hystereseeigenschaften des piezoelektrischen Antriebs und auch Toleranzen bei der Bewegungsübertragung zwischen dem piezoelektrischen Antrieb auf den Werkzeughalter 19 kompensiert.

Beim dargestellten Ausführungsbeispiel besteht der piezoelektrische Antrieb aus der direkt auf das Werkzeug 1 einwirkenden Piezotranslatoreinrichtung 21 und der auf den Werkzeughalter 19 einwirkenden Piezotranslatoreinrichtung 4. Die Piezotranslatoreinrichtung 21, welche aus einem Piezotranslator oder mehreren hintereinander geschalteten Piezotranslatoren bestehen kann, dient als Werkzeugträger. Auf diese Weise wird eine direkte Stellbewegungsübertragung auf das Werkzeug 1 gewährleistet. Die Piezotranslatoreinrichtung 21 eignet sich daher für eine Feinsteinstellung.

Die zweite Piezotranslatoreinrichtung 4 ist an ihrem einen Ende an dem Werkzeugschlitten 8 abgestützt und mit ihrem anderen Ende am Werkzeughalter 19. Die Piezotranslatoreinrichtung 4 kann ebenfalls aus einem Piezotranslator oder aus mehreren hintereinander geschalteten Piezotranslatoren bestehen. Die Piezotranslatoreinrichtung 4 kann auch im Zusammenhang mit der Grobeinstellung des Werkzeugs 1 zum Einsatz kommen, wobei dann die Fein- bzw. Feinsteinstellung, wie schon erläutert, durch die Piezotranslatoreinrichtung 21 gewährleistet wird.

Stellbewegungen der Piezotranslatoreinrichtung 4 erfolgen gegen die Vorspannkraft einer Feder 18. Hierdurch ist gewährleistet, daß bei einer Richtungsänderung der Stellbewegung der Piezotranslatoreinrichtung 4 das Werkzeug diese Richtungsänderung mitausführt.

Anstelle der beiden Piezotranslatoreinrichtungen 4 und 21 ist es auch möglich, nur eine der beiden Piezotranslatoreinrichtungen für die Feineinstellung zu verwenden. Es kann sich hier um die Piezotranslatoreinrichtung 4, welche an den Werkzeughalter 19 angreift, oder um die Piezotranslatoreinrichtung 21, welche direkt auf das Werkzeug 1 einwirkt, handeln.

Während sich das Werkstück 2 um die Spindelachse 9 dreht, führt das Drehwerkzeug 1 in der Ebene der Spindelachse 9 die schon angesprochene Schwenkbewegung um die Schwenkachse 3 aus und erzeugt auf diese Weise am Werkstück 2 die Formgebungsfläche mit der gewünschten Geometrie.

Zusätzlich kann eine Abtastvorrichtung für die Abtastung einer Schablone noch vorgesehen sein. Diese Anordnung ist in der Figur nicht dargestellt. Sie kann in der Weise ausgebildet sein, wie es aus der DE-PS 31 10 624 bekannt ist. Durch die Schablone läßt sich dabei eine Grundgeometrie einstellen.

Um eine hohe Genauigkeit der herzustellenden Geometrie an der Formgebungsfläche zu erreichen, kann die vom Werkzeug 1 am Werkstück 2 hergestellte Geometrie berührungslos abgetastet werden. Hierzu eignet sich eine berührungslos abtastende Oberflächenmeßeinrichtung 22. Es kann sich hierbei beispielsweise um eine mit Hilfe eines Laserstrahles abtastende Oberflächenmeßeinrichtung bekannter Art handeln. Hierbei wird auf die zu messende Oberfläche ein Laserstrahl fokussiert, und mit Hilfe eines Detektors wird das von der Oberfläche zurückgestreute Licht analysiert. Weicht der Fokus von der Oberfläche ab, so gibt der Detektor ein Signal für das Nachfahren der Optik, wobei der Nachführweg für die Bestimmung des Oberflächenprofils ausgewertet wird.

Das Ausgangssignal der Oberflächenmeßeinrichtung 22 wird der zentralen Rechnereinheit 10 zugeleitet, welche dann zusätzlich in Abhängigkeit von der festgestellten Istgeometrie an der Formgebungsfläche eine entsprechende Ansteuerung des piezoelektrischen Antriebs veranlaßt. In vorteilhafter Weise kann hierdurch ein Verschleiß des Werkzeugs erfaßt und kompensiert werden.

Zur Herstellung von nichtrotationssymmetrischen Geometrien für die Formgebungsfläche wird von einer Sensoreinrichtung 23 der Rotationswinkel der Spindel 5 um die Spindelachse 9 fortwährend abgetastet und ein entsprechendes Signal der Rechnereinheit 10 zugeleitet. Die Stellbewegung des piezoelektrischen Antriebs 4 und/oder 21 wird dann ebenfalls in Abhängigkeit von diesem Rotationswinkel gesteuert.

Die in der Figur dargestellte Einstelleinrichtung 14 kann auch in der Weise wirken, daß das materialabtragende Werkzeug 1 in Richtung der Spindelachse 9 bzw. parallel dazu und in einer Richtung senkrecht dazu geradlinig verstellbar ist. Hierbei ist es dann nicht erforderlich, daß die Schlittenführung 6 am Support 17 um die Drehachse 3 verschwenkbar ist. Es reicht bei dieser Ausführungsform dann aus, daß der Werkzeugschlitten 8 und der piezoelektrische Antrieb 4, 21 eine geradlinige Stellbewegung in Richtung der Spindelachse 9 bzw. parallel dazu auf das materialabtragende Werkzeug 1 ausübt, und ferner eine Stellbewegung senkrecht dazu. Hierzu kann dann der Werkzeugschlitten 8 an der Schlittenführung 6 ferner geradlinig in einer zur Spindelachse 9 senkrechten Richtung, insbesondere senkrecht zur Zeichenebene, geführt werden. Zusätzlich kann für eine Feineinstellung in dieser zur Spindelachse 9 senkrechten Richtung auch eine zusätzliche Piezotranslatoreinrichtung, welche zum piezoelektrischen Antrieb gehört, auf das Werkzeug 1 wirken.

**Patentansprüche**

1.  Vorrichtung zur Herstellung einer Formgebungsfläche an einem Formwerkzeug für optische und ophthalmische Linsen, insbesondere einer Formgebungsfläche an einem Formwerkzeug für die Fertigung von Kontaktlinsen durch Formgießen,

gekennzeichnet durch

- eine Arbeitsspindel (5), die von einem Drehantrieb um eine Spindelachse (9) angetrieben ist, und an welcher ein Formwerkzeug-Rohling als Werkstück (2) befestigt ist ;
- ein gegenüber dem Werkstück (2) verstellbares materialabtragendes Werkzeug (1), mit welchem am Werkstück (2) die Formgebungsfläche gebildet wird, und
- eine Einstelleinrichtung (14), mit welcher während der Bildung der Formgebungsfläche am Werkstück (2) eine Stellbewegung des Werkzeugs (1) gegenüber dem Werkstück (2) in Abhängigkeit von der Linsengeometrie, die mit der aus dem Werkstück (2) gebildeten Formgebungsfläche geformt wird, einstellbar ist.

2. Vorrichtung nach Anspruch 1, dadurch gekennzeichnet, daß das materialabtragende Werkzeug (1) um eine zur Spindelachse (9) senkrechte Schwenkachse (3) schwenkbar ist und mit der Einstelleinrichtung (14) der Schwenkradius des Werkzeugs (1) gegenüber der Schwenkachse (3) schwenkwinkelabhängig einstellbar ist.

3. Vorrichtung nach Anspruch 1, dadurch gekennzeichnet, daß das materialabtragende Werkzeug (1) durch die Einstelleinrichtung (14) in Richtung der und parallel zur Spindelachse (9) und in einer dazu senkrechten Richtung einstellbar ist.

4. Vorrichtung nach einem der Ansprüche 1 bis 3, dadurch gekennzeichnet, daß die Einstelleinrichtung (14) einen piezoelektrischen Antrieb (4, 21) aufweist, der eine Stellbewegung für das materialabtragende Werkzeug (1) in wenigstens einer der Einstellrichtungen erzeugt.

5. Vorrichtung nach Anspruch 4, dadurch gekennzeichnet, daß der piezoelektrische Antrieb (4, 21) für eine Stellbewegung des materialabtragenden Werkzeugs (1) in radialer Richtung zur Schwenkachse (3) des Werkzeugs (1) ausgerichtet ist.

6. Vorrichtung nach Anspruch 5, dadurch gekennzeichnet, daß die Stellbewegung des piezoelektrischen Antriebs (4, 21) vom Schwenkwinkel des Werkzeugs (1) um die Schwenkachse (3) abhängig ist.

7. Vorrichtung nach einem der Ansprüche 1 bis 6, dadurch gekennzeichnet, daß die Stellbewegung des piezoelektrischen Antriebs (4,21) in Abhängigkeit vom Rotationswinkel der Spindel (5) um die Spindelachse (9) gesteuert ist.

8. Vorrichtung nach einem der Ansprüche 1 bis 7, dadurch gekennzeichnet, daß der piezoelektrische Antrieb (4, 21) an einer um die Schwenkachse (3) schwenkbaren Schlittenführung (6), an welcher das Werkzeug (1) in radialer Richtung zur Schwenkachse (3) geführt ist, gelagert ist.

9. Vorrichtung nach einem der Ansprüche 1 bis 8, dadurch gekennzeichnet, daß der piezoelektrische Antrieb (4, 21) eine Piezotranslatoreinrichtung (4) aufweist, deren eines Ende an einem an der Schlittenführung (6) geführten Schlitten (8), an welchem ein Werkzeughalter (19) für das Werkzeug (1) gelagert ist, abgestützt ist und deren anderes Ende am Werkzeughalter (19) abgestützt ist.

10. Vorrichtung nach einem der Ansprüche 1 bis 9, dadurch gekennzeichnet, daß der Werkzeughalter (19) mit Vorspannung gegen die Piezotranslatoreinrichtung (4) abgestützt ist.

11. Vorrichtung nach einem der Ansprüche 1 bis 10, dadurch gekennzeichnet, daß die Piezotranslatoreinrichtung (4) aus mehreren in radialer Richtung zur Schwenkachse (3) hintereinander angeordneten Piezotranslatoren besteht.

12. Vorrichtung nach einem der Ansprüche 1 bis 11, dadurch gekennzeichnet, daß der piezoelektrische Antrieb (4, 21) eine direkt auf das Werkzeug (1) einwirkende Piezotranslatoreinrichtung (21) aufweist.

13. Vorrichtung nach Anspruch 12, dadurch gekennzeichnet, daß die Piezotranslatoreinrichtung (21) als Werkzeughalter ausgebildet ist.

14. Vorrichtung nach einem der Ansprüche 1 bis 13, dadurch gekennzeichnet, daß die direkt auf das Werkzeug (1) einwirkende Piezotranslatoreinrichtung (21) zur Feineinstellung des Werkzeugs (1) und die auf den Werkzeughalter (19 bzw. 21) wirkende Piezotranslatoreinrichtung (4) zur Grobeinstellung des Werkzeugs (1) dient.

15. Vorrichtung nach einem der Ansprüche 1 bis 14, dadurch gekennzeichnet, daß die Werkzeugeinstellung zusätzlich durch eine Schablone gesteuert ist.

16. Vorrichtung nach einem der Ansprüche 1 bis 15, dadurch gekennzeichnet, daß zur Erzielung der gewünschten Geometrie an der Formgebungsfläche des Werkstücks (2) die Betriebsspannung des piezoelektrischen Antriebs (4, 21) in Abhängigkeit vom Schwenkwinkel des Werkzeugs (1) um die Schwenkachse (3) eingestellt ist.

**17.** Vorrichtung nach einem der Ansprüche 1 bis 16, dadurch gekennzeichnet, daß ein Sensor (11) für die Ist-Stellbewegung des piezoelektrischen Antriebs (4, 21) an eine Rechnereinheit (10) angeschlossen ist, daß die Rechnereinheit (10) ferner einen durch die gewünschte Geometrie der Formgebungsfläche für jeweilige Schwenkwinkel des Werkzeugs (1) vorgegebene Sollwerte der Stellbewegung empfängt bzw. speichert, und daß die Betriebsspannung für den piezoelektrischen Antrieb (4, 21) in Abhängigkeit vom Sollwert-Istwertvergleich eingestellt ist.

**18.** Vorrichtung nach einem der Ansprüche 1 bis 17, dadurch gekennzeichnet, daß ferner der Schlitten (8) für eine Grobeinstellung des Schwenkradiusses des Werkzeugs (1) an der Schlittenführung (6) linear verstellbar ist.

**19.** Vorrichtung nach einem der Ansprüche 1 bis 18, dadurch gekennzeichnet, daß das Werkzeug (1) als spanendes Drehwerkzeug ausgebildet ist.

**20.** Vorrichtung nach einem der Ansprüche 1 bis 18, dadurch gekennzeichnet, daß das Werkzeug (1) als Laser ausgebildet ist.

**21.** Vorrichtung nach einem der Ansprüche 1 bis 20, dadurch gekennzeichnet, daß die Einstellung des Werkzeugs (1) ferner in Abhängigkeit vom Ausgangssignal einer Oberflächenmeßeinrichtung (22) gesteuert ist, welche die vom Werkzeug (1) hergestellte Istgeometrie an der Formgebungsfläche des Werkstücks (2) erfaßt.

Europäisches
Patentamt

# EUROPÄISCHER RECHERCHENBERICHT

Nummer der Anmeldung

EP  91 81 0026

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-2 212 772  (BETTIOL) * Seite 1, Zeilen 9-14; Anspruch 1 * | 1,2 | B 29 C  33/38 B 23 Q   1/14 B 29 D  11/00 |
| Y | | 4,5,9, 10,19, 20 | |
| A | --- | 3,15 | |
| Y | DE-U-8 513 146  (KESSLER) * Ansprüche 1,4,6 * | 4,5,9, 10,19 | |
| A | --- | 12,16, 17 | |
| Y | US-A-4 307 046  (NEEFE) * Anspruch 1 * --- | 20 | |
| A | FR-A-2 378 607  (NIPPON) * Anspruch 1 * --- | 1,21 | |
| P,A | EP-A-0 359 084  (SEIKO) * Seite 10, linke Spalte, Zeilen 55-58; Seite 11, rechte Spalte, Zeilen 1-35 * --- | 1 | |
| A | DE-A-2 356 910  (AGFA) * Anspruch 1 * --- | 1 | RECHERCHIERTE SACHGEBIETE (Int. Cl.5) B 23 Q B 24 B B 29 C B 29 D |
| D,A | DE-C-3 110 624  (TITMUS) * Anspruch 1 * --- | 2 | |
| A | US-A-3 492 894  (HAHN) * Kurzfassung * --- | 11 | |
| A | JP-A-60 114 457 (NIHON) * Figur 4 * ----- | 21 | |

Der vorliegende Recherchenbericht wurde für alle Patentansprüche erstellt

| Recherchenort | Abschlußdatum der Recherche | Prüfer |
|---|---|---|
| DEN HAAG | 10-05-1991 | DE GUSSEM J.L. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

&: Mitglied der gleichen Patentfamilie, übereinstimmendes Dokument

EPO FORM 1503 03.82 (P0403)